# EUROPEAN PATENT SPECIFICATION

(11) **EP 4 272 941 B1**
(45) Date of publication and mention of the grant of the patent: **08.10.2025**
(21) Application number: 21914524.0
(22) Date of filing: 29.12.2021
(51) Int. Cl.: B29D 30/24, B29D 30/26

(54) **MIDDLE DRUM ASSEMBLY OF BUILDING DRUM, BUILDING DRUM, AND METHOD FOR REPLACING MIDDLE DRUM BLOCK OF MIDDLE DRUM ASSEMBLY**
MITTELTROMMELANORDNUNG EINER BAUTROMMEL, BAUTROMMEL UND VERFAHREN ZUM ERSETZEN EINES MITTELTROMMELBLOCKS EINER MITTELTROMMELANORDNUNG
ENSEMBLE TAMBOUR CENTRAL DE TAMBOUR DE CONSTRUCTION, TAMBOUR DE CONSTRUCTION ET PROCÉDÉ DE REMPLACEMENT DE BLOC DE TAMBOUR CENTRAL D'UN ENSEMBLE TAMBOUR CENTRAL

(30) Priority: 31.12.2020 CN 202011638978
(43) Date of publication of application: 08.11.2023
(73) Proprietor: MESNAC CO., LTD., Qingdao, Shandong 266112 (CN); QINGDAO MESNAC MACHINERY & ELECTRIC ENGINEERING CO., LTD., Jiaozhou Qingdao, Shandong 266300 (CN)
(72) Inventor: SUN, Xiaosong, Qingdao, Shandong 266042 (CN); YU, Yihang, Qingdao, Shandong 266042 (CN); SONG, Jianling, Qingdao, Shandong 266042 (CN)
(74) Representative: Winter, Brandl - Partnerschaft mbB
(86) International application number: PCT/CN2021/142573
(87) International publication number: WO 2022/143792

(56) References cited:
- WO-A1-2012/031193
- CN-A- 105 324 236
- CN-A- 106 378 947
- CN-U- 208 343 502
- CN-U- 208 343 502
- CN-U- 209 426 210
- CN-U- 211 138 203
- CN-U- 211 390 234
- CN-U- 211 390 234
- CN-U- 214 395 529

## Description

### Technical Field

The present invention relates to the technical field of tire processing, and in particular to a middle drum assembly of a building drum, and a replacement method for a middle drum block of the middle drum assembly and the building drum.

### Background

The length of the toothed blocks at the drum shoulder of the building drum needs to be changed according to different tire specifications. Conventional the toothed blocks are connected to the toothed block connecting seat via screws. In this way, when the toothed blocks are changed, the screws need to be removed, which takes a lot of time and affects the efficiency.

Patent document CN 211 390 234 U discloses the features of the preamble of independent claim 1.

### Summary

The main purpose of the present invention is to provide a middle drum assembly of a building drum, and a replacement method for a middle drum block of the middle drum assembly and the building drum, so as to solve the problem in the prior art that the replacement of a toothed block at a drum shoulder consumes time and effort.

In order to achieve the described object, according to an optional embodiment of the present invention, a middle drum assembly of a building drum is provided, including: a drum shoulder; a middle drum block having a mounting groove and a fixing hole; a first fastener movably disposed in the drum shoulder and capable of moving along the axial direction of the building drum, the first fastener has a step surface, and the middle drum block is abutting joint the drum shoulder in the radial direction of the building drum, the mounting groove is aligned with the first fastener, the middle drum block presses the step surface and a part of the first fastener stretches into the mounting groove; a second fastener, a part of the second fastener passing through the drum shoulder, wherein after the part of the first fastener stretches into the mounting groove, the fixing hole is aligned with the second fastener, the middle drum block is close to the drum shoulder along the axial direction of the building drum, and a part of the second fastener exposed out of the drum shoulder stretches into the fixing hole.

In an optional embodiment, the middle drum block is arc-shaped, and the mounting groove is in communication with both an inner side wall of the arc shape and an end surface of the arc shape.

In an optional embodiment, the first fastener includes a large diameter section and a small diameter section which are sequentially connected, the step surface is formed between the large diameter section and the small diameter section, the small diameter section stretches into the drum shoulder, and the large diameter section is able to stretch into the mounting groove.

In an optional embodiment, the mounting groove includes a diameter-expanding section and a diameter-reducing section that are sequentially communicated with each other, the diameter-reducing section is closer to an end surface of the drum shoulder than the diameter-expanding section, the large diameter section stretches into the diameter-expanding section, the small diameter section stretches into the diameter-reducing section, and the step surface abuts against an end surface of the diameter-reducing section that faces the diameter-expanding section.

In an optional embodiment, an outer edge of the mounting groove is provided with an inclined surface, along a direction in which the middle drum block is abutting joint the drum shoulder in the radial direction of the building drum, the inclined surface is inclined in a direction away from the drum shoulder, when the middle drum block is abutting joint the drum shoulder in the radial direction of the building drum, the inclined surface presses the step surface, and enabling the first fastener to move in a direction of protruding from the drum shoulder, and to stretch into the mounting groove.

In an optional embodiment, the middle drum assembly further including an elastic member, wherein two ends of the elastic member are respectively abutted against the drum shoulder and the first fastener, and provide with an elastic force for the first fastener moving in a direction stretching into the drum shoulder.

In an optional embodiment, the middle drum block includes: a tooth portion located on an outer side of the middle drum block; a connecting portion located on an inner side surface of an end portion of the tooth portion, wherein the mounting groove and the fixing hole are both provided on an end surface of the connecting portion.

In an optional embodiment, a plurality of fixing holes and a plurality of second fasteners are provided, and both sides of the mounting groove are respectively arranged on at least one fixing hole of the plurality of fixing holes.

In an optional embodiment, the mounting groove is a U-shaped groove, the first fastener is a screw having a screw head, and the second fastener is a pin.

According to an optional embodiment of the present invention, a building drum is provided, which includes the described middle drum assembly.

According to an optional embodiment of the present invention, a replacement method for a middle drum block of a middle drum assembly is provided, the middle drum assembly includes a drum shoulder, a middle drum block, and a first fastener and a second fastener which pass through the drum shoulder, the middle drum block is provided with a mounting groove and a fixing hole, the replacement method for the middle drum block includes: the middle drum block is close to one side of a drum shoulder in the radial direction of the middle drum assembly, and forming a gap with an end surface of the drum shoulder, and then the middle drum block continuing to move towards a centre of the middle drum assembly, during a movement process, the middle drum block presses a step surface of the first fastener, such that one end of the first fastener is away from the drum shoulder and stretches into the mounting groove, when the middle drum block moves until the fixing hole is aligned with the second fastener, the middle drum block is close to the end surface of the drum shoulder along the axial direction of the middle drum assembly, a part of the first fastener retracts into the drum shoulder, and the second fastener stretches into the fixing hole.

In an optional embodiment, the first fastener includes a large diameter section and a small diameter section which are sequentially connected; the step surface is formed between the large diameter section and the small diameter section; when the middle drum block presses the step surface, the first fastener moves in a direction of protruding from the drum shoulder; and the large diameter section stretches into the mounting groove.

In an optional embodiment, an outer edge of the mounting groove is provided with an inclined surface, and when the middle drum block continues to move towards the center of the middle drum assembly, the inclined surface presses the step surface.

In an optional embodiment, the middle drum assembly further includes an elastic member, when the middle drum block presses the step surface, the first fastener compresses the elastic member, the length of the elastic member is shortened, and when the middle drum block is close to the end surface of the drum shoulder in the axial direction of the middle drum assembly, the first fastener releases the elastic member, and the length of the elastic member is lengthen.

By applying the technical solution of the present invention, the mounting groove and the fixing hole are provided on the middle drum block, and the first fastener and the second fastener are respectively provided with the mounting groove and the fixing hole by matching manner, wherein the first fastener and the second fastener penetrate the drum shoulder in advance. When the middle drum block needs to be mounted, the middle drum block is pressed downwards along one side of the radial direction of the building drum close to the drum shoulder. During this process, the middle drum block compresses the step surface of the first fastener, causing the first fastener to move in a direction to extend beyond the drum shoulder. One end of the first fastener is able to stretch into the mounting groove, and a distance is formed between the end surface of the middle drum block and the end surface of the drum shoulder, the distance is not less than the distance that the second fastener is exposed to the drum shoulder, so that the middle drum block is able to avoid the movement of the second fastener, when the middle drum block moves radially into place, the fixing hole is aligned with the second fastener, and at this moment, the middle drum block is axially pushed, so that the middle drum block moves in the direction of approaching the drum shoulder, and the first fastener moves in the direction of retracting the drum shoulder, at the same time, the second fastener stretches into the fixing hole, so that the radial movement of the middle drum block is locked by the second fastener, In addition, the axial movement needs an external force to pull the middle drum block, so that the middle drum block is mounted on the drum shoulder. When the middle drum block needs to be disassembled, the middle drum block is axially pulled by an external force, so that the second fastener is separated from the fixing hole, and then the drum block is radially pulled, so that the first fastener is separated from the mounting groove, and thus the middle drum block is disassembled and replaced. The above-mentioned arrangement method enables the dismounting and mounting of the middle drum block to be carried out quickly without the need of a dismounting screw, thus greatly improving the replacement efficiency; in addition, the dismounting and mounting process only needs to be carried out by one-step pressing and one-step pushing and one-step pulling and one-step lifting, so that the dismounting and mounting are convenient and time-saving and labour-saving.

### Brief Description of the Drawings

The accompanying drawings, which form a part of the present invention, are configured for providing a further understanding of the present invention. The schematic embodiments and illustrations of the present invention are configured for explaining the present invention, and do not form improper limits to the present invention. In the drawings:
Figure 1 shows a sectional view of a middle drum assembly at a mounting groove in the present invention;
Figure 2 shows a cross-sectional view of the middle drum assembly of figure 1 at a fixing hole;
Figure 3 shows a schematic view of a middle drum block of the middle drum assembly in figure 1.

The figures include the following reference signs:
10: Drum shoulder; 20: middle drum block; 21: mounting groove; 22: fixing hole; 23: inclined plane; 24: Tooth portion; 25: connecting portion; 30: first fastener; 40: second fastener; 50: elastic member.

### Detailed Description of the Embodiments

It is important to note that the embodiments of the present disclosure and the characteristics in the embodiments may be combined under the condition of no conflicts. The present disclosure will be described below with reference to the drawings and embodiments in detail.

In order to solve the problem in the prior art that changing a toothed block at a drum shoulder consumes time and effort, the present invention provides a middle drum assembly of a building drum, and a replacement method for a middle drum block of the middle drum assembly and the building drum. Wherein, the building drum has a middle drum assembly as described below.

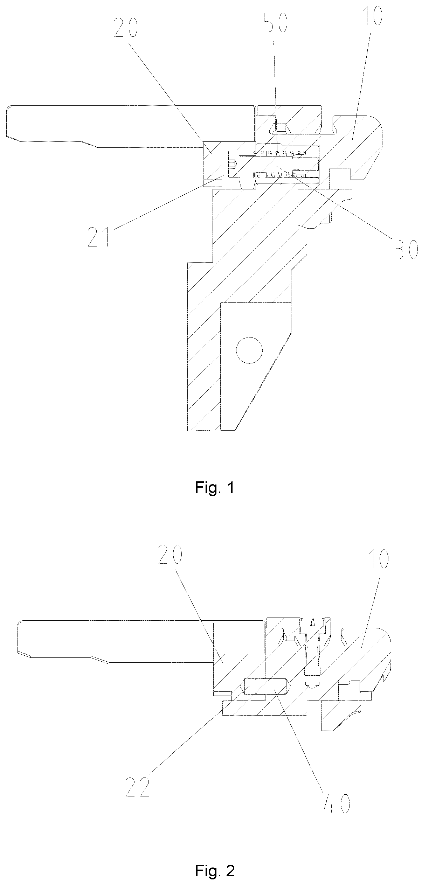

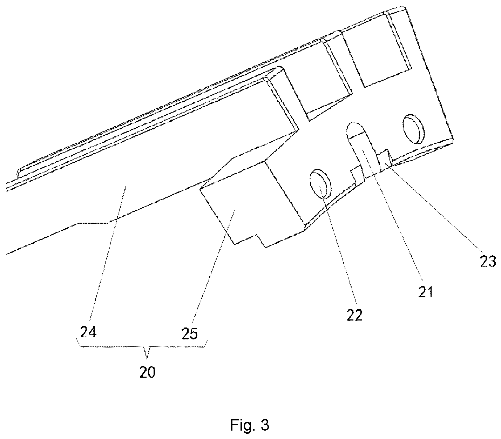

A middle drum assembly of a building drum as shown in figures 1-3, including a drum shoulder 10, a middle drum block 20, a first fastener 30 and a second fastener 40, wherein the middle drum block 20 is provided with an mounting groove 21 and a fixing hole 22; the first fastener 30 is movably disposed in the drum shoulder 10 and moved along the axial direction of the building drum; the first fastener 30 has a step surface; when the middle drum block 20 abuts against the drum shoulder 10 along the radial direction of the building drum, the mounting groove 21 is aligned with the first fastener 30; the middle drum block 20 compresses the step surface and enables a part of the first fastener 30 to stretch into the mounting groove 21; a part of the second fastener 40 passes through the drum shoulder 10. After the part of the first fastener 30 stretches into the mounting groove 21, the fixing hole 22 is aligned with the second fastener 40, the middle drum block 20 is close to the drum shoulder 10 along the axial direction of the building drum, and a part of the second fastener 40 exposed outside the drum shoulder 10 stretches into the fixing hole 22.

In the present embodiment, the mounting groove 21 and the fixing hole 22 are provided on the middle drum block 20, and the first fastening member 30 and the second fastening member 40 are provided in matching with the mounting groove 21 and the fixing hole 22, wherein the first fastening member 30 and the second fastening member 40 are pre-penetrated on the drum shoulder 10. When it is required to mount the middle drum block 20, the middle drum block 20 is firstly arranged along the radial direction of the building drum on the side close to the drum shoulder 10, pressing down the middle drum block 20, in which process, the middle drum block 20 presses the step surface of the first fastener 30, so that the first fastener 30 moves in a direction of protruding from the drum shoulder 10, One end of the first fastener 30 is able to stretch into the mounting groove 21, and a distance is formed between an end surface of the middle drum block 20 and an end surface of the drum shoulder 10, the distance is not less than the distance that the second fastener 40 is exposed to the drum shoulder 10, so that the middle drum block 20 is able to avoid the movement of the second fastener 40. When the middle drum block 20 is radially moved into place, the fixing hole 22 is aligned with the second fastener 40, and at this time, the middle drum block 20 is axially pushed, so that the middle drum block 20 moves in a direction of approaching the drum shoulder 10, and the first fastener 30 moves in a direction of retracting the drum shoulder 10, at the same time, the second fastener 40 stretches into the fixing hole 22, such that the radial movement of the middle drum block 20 is locked by the second fastener 40. In addition, the axial movement needs an external force to pull the middle drum block 20, so that the middle drum block 20 is mounted on the drum shoulder 10. When the middle drum block 20 needs to be disassembled, the middle drum block 20 is axially pulled by an external force, so that the second fastener 40 is separated from the fixing hole 22, and then the middle drum block 20 is radially pulled, so that the first fastener 30 is separated from the mounting groove 21, and then the middle drum block 20 is disassembled and replaced. The above-mentioned arrangement method enables the dismounting and mounting of the middle drum block 20 without the need of a dismounting screw, so that the dismounting and mounting are performed quickly, thereby greatly improving the replacement efficiency. In addition, the dismounting and mounting process only needs to be performed by one-step pressing and one-step pushing and one-step pulling and one-step lifting, so that the dismounting and mounting are convenient and time-saving and labour-saving.

The axial direction and the radial direction mentioned in this embodiment refer to both the axial direction and the radial direction of the building drum, and more specifically, the axial direction and the radial direction of the main shaft of the building drum.

In the present embodiment, the middle drum block 20 is arc-shaped, the arc-shape cooperates with other structures of the building drum, such as a backing plate and a sliding block; the mounting groove 21 is in communication with both the arc-shaped inner side wall and the arc-shaped end surface; the first fastener 30 stretches into the mounting groove 21 via the arc-shaped inner side wall, and the end surface is in communication for avoiding the first fastener 30, so as to ensure that the first fastener 30 stretches into the mounting groove 21.

Preferably, the mounting groove 21 of the present embodiment is U-shaped, and the opening side of the U-shape faces the inner side of the arc-shaped middle drum block 20.

In this embodiment, the length direction of the mounting groove 21 and the fixing hole 22, and the axial direction of the first fastening member 30 and the axial direction of the second fastening member 40 are all along the axial direction of the building drum, and the sliding direction of the first fastening member 30 is also the axial direction of the building drum.

In the present embodiment, the first fastener 30 includes a large diameter section and a small diameter section which are connected in sequence, wherein a step surface is formed between the large diameter section and the small diameter section, the small diameter section stretches into the drum shoulder 10, and the large diameter section is able to stretch into the mounting groove 21. The first fastener 30 of this embodiment uses a screw, and a screw head with a larger diameter at one end of the screw is a large diameter section, the other part of the screw is a small diameter section, the small diameter section passes through the drum shoulder 10, and the large diameter section is exposed to the drum shoulder 10, such that when the drum block 20 is pressed downwards radially, due to the large size of the large diameter section, the outer edge of the mounting groove 21 will press the step surface formed between the large diameter section and the small diameter section. Thus, the first fastener 30 is pulled out of the drum shoulder 10 for a distance, and the effect of avoiding the second fastener 40 and the drum block 20 in subsequent fastening is achieved.

Corresponding to the structure of the first fastener 30, the mounting groove 21 includes a diameter-expanding section and a diameter-reducing section which are sequentially communicated, furthermore, the diameter-reducing section is closer to the end surface of the drum shoulder 10 than the diameter-expanding section, and when the drum block 20 is pressed down, the large diameter section stretches into the diameter-expanding section, the small diameter section stretches into the diameter-reducing section, such that the step surface of the first fastener 30 is able to abut against the end surface of the diameter-reducing section facing the diameter-expanding section, realizing a stop fit between the first fastener 30 and the middle drum block 20, and when the middle drum block 20 is pulled in a direction away from the drum shoulder 10, the end surface of the diameter-reducing segment is able to drive the first fastener 30 to move by pressing the step surface.

In the present embodiment, the outer edge of the mounting groove 21, i.e., the corner of the mounting groove 21 on the inner side of the end surface of the middle drum block 20, is provided with a inclined surface 23, furthermore, in the direction in which the drum block 20 abuts against the drum shoulder 10 in the radial direction of the building drum, the inclined surface 23 is inclined away from the drum shoulder 10. In this way, when the middle drum block 20 is pressed down, the middle drum block 20 abuts against the drum shoulder 10 in the radial direction of the building drum, the inclined surface 23 squeezes the edge of the step surface, thereby moving the first fastener 30 in a direction to protrude from the drum shoulder 10. Thus, when pulled out of the drum shoulder 10, the larger diameter section of the first fastener 30 is able to stretch into the mounting groove 21. By means of the arrangement of the inclined surface 23, the first fastener 30 is smoothly squeezed and pulled out of the first fastener 30, thereby ensuring the fluency of a pressing action.

In this embodiment, the middle drum assembly further includes an elastic member 50, the elastic member 50 is a spring and is sleeved on the first fastener 30, two ends of the elastic member 50 respectively abut against the drum shoulder 10 and the first fastener 30, and provide an elastic force for the first fastener 30 to move in a direction stretching into the drum shoulder 10. In this way, on the one hand, when the middle drum block 20 is assembled and disassembled, the stop surface keeps abutting against the middle drum block 20 all the time, and when the middle drum block 20 moves axially, the stop surface keeps moving synchronously with the first fastener 30 all the time, on the other hand, after the installation is completed, the elastic member 50 pulls the middle drum block 20 close to the drum shoulder 10 via the first fastener 30, so that the middle drum block 20 is always tightly fitted with the drum shoulder 10, and the middle drum block 20 is always in a position close to the drum shoulder 10 when no external force is applied or no external force exceeding a certain magnitude is applied. The second fastening member 40 always stretches into the fixing hole 22 to ensure the stability of the middle drum block 20 after the middle drum block 20 is installed. It should be noted that the elastic force of the spring needs to be greater than the force of the drum block 20 shaking axially when the building drum is in normal use, so that the stability of the drum block 20 is ensured when the building drum is in normal operation, so that the drum block 20 is dismounted only when the operator disassembles the drum block 20. Certainly, in addition to the elastic member 50, the foregoing effect may also be implemented in another manner, for example, the first fastener 30 is replaced with an elastic unit, and the foregoing effect is implemented by using the elasticity of the first fastener 30; or in other ways.
the middle drum block 20 in the present embodiment is a toothed block, which includes a tooth portion 24 and a connecting portion 25, in which the tooth portion 24 is located on an outer side face of the middle drum block 20 and is configured for tire processing; the connecting portion 25 is located on an inner side surface of an end portion of the tooth portion 24 and is configured to cooperate with components such as a drum shoulder 10, and the mounting groove 21 and the fixing hole 22 are both provided on an end surface of the connecting portion 25.

In the present embodiment, one mounting groove 21 and one first fastener 30 are provided, the two cooperate with each other, and there are a plurality of fixing holes 22 and a plurality of second fasteners 40. In the present embodiment, two fixing holes 22 are provided, and at least one fixing hole 22 is provided on both sides of the mounting groove 21, so that the middle drum block 20 is subjected to a force balance, and the stability of the middle drum block 20 during normal operation of the building drum is ensured. In this embodiment, the fixing hole 22 is a blind hole, and the second fastening member 40 is a pin with an equal diameter. Certainly, the number of the components and the specific application may be changed as required.

The present embodiment further provides a replacement method for a middle drum block of a middle drum assembly. The middle drum assembly is the described middle drum assembly, including a drum shoulder 10, a middle drum block 20, and a first fastener 30 and a second fastener 40 which pass through the drum shoulder 10, the middle drum block 20 has a mounting groove 21 and a fixing hole 22. The replacement method for the middle drum block 20 includes: when the middle drum block 20 is mounted, the middle drum block 20 is located on one side, close to the drum shoulder 10, in the radial direction of the middle drum assembly, and forms a gap with the end surface of the drum shoulder 10, then the middle drum block 20 continues to move towards the centre of the middle drum assembly, and during the movement, the middle drum block 20 compresses the step surface of the first fastener 30, so that one end of the first fastener 30 is away from the drum shoulder 10 and stretches into the mounting groove 21, and after the drum block 20 moves to the fixing hole 22 and is aligned with the second fastener 40, the middle drum block 20 is close to the end surface of the drum shoulder 10 in the axial direction of the middle drum assembly, and a part of the first fastener 30 retracts into the drum shoulder 10, the second fastening member 40 stretches into the fixing hole 22. When it is required to remove the middle drum block 20, the described process is reversely operated.

In the present embodiment, since the first fastening member 30 includes a large diameter section and a small diameter section which are sequentially connected, and a step surface is formed between the large diameter section and the small diameter section, when the middle drum block 20 presses the step surface, the first fastening member 30 moves in a direction of protruding from the drum shoulder 10 under the pressing of the middle drum block 20, and the large diameter section stretches into the mounting groove 21.

In the present embodiment, the outer edge of the mounting groove 21 is provided with a inclined surface 23, and when the middle drum block 20 continues to move towards the center of the middle drum assembly, the inclined surface 23 presses the step surface.

In the present embodiment, the middle drum assembly further includes an elastic member 50, when the middle drum block 20 presses the step surface, the first fastener 30 compresses the elastic member 50, the length of the elastic member 50 becomes shorter, and when the middle drum block 20 is close to the end surface of the drum shoulder 10 in the axial direction of the middle drum assembly, the first fastener 30 releases the elastic member 50, and the length of the elastic member 50 becomes longer. The effect of limiting the axial movement of the middle bump 20 is achieved by the elastic member 50.

It should be noted that, a plurality in the foregoing embodiment refers to at least two.

From the above description, it is seen that the above embodiments of the present invention achieve the following technical effects:
1, the problem in the prior art that the replacement of a toothed block of a drum shoulder consumes time and effort is solved;
2, the dismounting and mounting of the middle drum block do not require a dismounting screw, and is rapidly dismounted and mounted, greatly improving the replacement efficiency;
3, The disassembling and assembling process only needs to be one-step pressed and one-step pushed and one-step pulled and one-step lifted, which is convenient for disassembling and assembling and saves time and effort.

## Claims

1. A middle drum assembly of a building drum, comprising:
a drum shoulder (10);
a middle drum block (20) having a mounting groove (21) and a fixing hole (22);
**characterised by**
a first fastener (30) movably disposed in the drum shoulder (10) and capable of moving along the axial direction of the building drum, the first fastener (30) has a step surface, and the middle drum block (20) is abutting joint the drum shoulder (10) in the radial direction of the building drum, the mounting groove (21) is aligned with the first fastener (30), the middle drum block (20) presses the step surface and a part of the first fastener (30) stretches into the mounting groove (21); and
a second fastener (40), a part of the second fastener (40) passing through the drum shoulder (10), wherein after the part of the first fastener (30) stretches into the mounting groove (21), the fixing hole (22) is aligned with the second fastener (40), the middle drum block (20) is close to the drum shoulder (10) along the axial direction of the building drum, and a part of the second fastener (40) exposed out of the drum shoulder (10) stretches into the fixing hole (22).

2. The middle drum assembly according to claim 1, wherein the middle drum block (20) is arc-shaped, and the mounting groove (21) is in communication with both an inner side wall of the arc shape and an end surface of the arc shape.

3. The middle drum assembly according to claim 1, wherein the first fastener (30) comprises a large diameter section and a small diameter section which are sequentially connected, the step surface is formed between the large diameter section and the small diameter section, the small diameter section stretches into the drum shoulder (10), and the large diameter section is able to stretch into the mounting groove (21).

4. The middle drum assembly according to claim 3, wherein the mounting groove (21) comprises a diameter-expanding section and a diameter-reducing section that are sequentially communicated with each other, the diameter-reducing section is closer to an end surface of the drum shoulder (10) than the diameter-expanding section, the large diameter section stretches into the diameter-expanding section, the small diameter section stretches into the diameter-reducing section, and the step surface abuts against an end surface of the diameter-reducing section that faces the diameter-expanding section.

5. The middle drum assembly according to claim 1, wherein an outer edge of the mounting groove (21) is provided with an inclined surface (23), along a direction in which the middle drum block (20) is abutting joint the drum shoulder (10) in the radial direction of the building drum, the inclined surface (23) is inclined in a direction away from the drum shoulder (10), when the middle drum block (20) is abutting joint the drum shoulder (10) in the radial direction of the building drum, the inclined surface (23) presses the step surface, and enabling the first fastener (30) to move in a direction of protruding from the drum shoulder (10), and to stretch into the mounting groove (21).

6. The middle drum assembly according to claim 1, wherein the middle drum assembly further comprising an elastic member (50), wherein two ends of the elastic member (50) are respectively abutted against the drum shoulder (10) and the first fastener (30), and provide with an elastic force for the first fastener (30) moving in a direction stretching into the drum shoulder (10).

7. The middle drum assembly according to claim 1, wherein the middle drum block (20) comprises:
a tooth portion (24) located on an outer side of the middle drum block (20);
a connecting portion (25) located on an inner side surface of an end portion of the tooth portion (24), wherein the mounting groove (21) and the fixing hole (22) are both provided on an end surface of the connecting portion (25).

8. The middle drum assembly according to claim 1, wherein a plurality of fixing holes (22) and a plurality of second fasteners (40) are provided, and both sides of the mounting groove (21) are respectively arranged on at least one fixing hole (22) of the plurality of fixing holes (22).

9. The middle drum assembly according to claim 1, wherein the mounting groove (21) is a U-shaped groove, the first fastener (30) is a screw having a screw head, and the second fastener (40) is a pin.

10. A building drum, comprising the middle drum assembly in any one of claims 1-9.

11. A replacement method for a middle drum block of a middle drum assembly according to any of claims 1-9, the replacement method for the middle drum block (20) comprises: the middle drum block (20) is close to one side of a drum shoulder (10) in the radial direction of the middle drum assembly, and forming a gap with an end surface of the drum shoulder (10), and then the middle drum block (20) continuing to move towards a centre of the middle drum assembly, during a movement process, the middle drum block (20) presses a step surface of the first fastener (30), such that one end of the first fastener (30) is away from the drum shoulder (10) and stretches into the mounting groove (21), when the middle drum block (20) moves until the fixing hole (22) is aligned with the second fastener (40), the middle drum block (20) is close to the end surface of the drum shoulder (10) along the axial direction of the middle drum assembly, a part of the first fastener (30) retracts into the drum shoulder (10), and the second fastener (40) stretches into the fixing hole (22).

12. The replacement method for the middle drum block according to claim 11, wherein the first fastener (30) comprises a large diameter section and a small diameter section which are sequentially connected; the step surface is formed between the large diameter section and the small diameter section; when the middle drum block (20) presses the step surface, the first fastener (30) moves in a direction of protruding from the drum shoulder (10); and the large diameter section stretches into the mounting groove (21).

13. The replacement method for the middle drum block according to claim 11, wherein an outer edge of the mounting groove (21) is provided with an inclined surface (23), and when the middle drum block (20) continues to move towards the center of the middle drum assembly, the inclined surface (23) presses the step surface.

14. The replacement method for the middle drum block according to claim 11, wherein the middle drum assembly further comprises an elastic member (50), when the middle drum block (20) presses the step surface, the first fastener (30) compresses the elastic member (50), the length of the elastic member (50) is shortened, and when the middle drum block (20) is close to the end surface of the drum shoulder (10) in the axial direction of the middle drum assembly, the first fastener (30) releases the elastic member (50), and the length of the elastic member (50) is lengthen.

## Patentansprüche

1. Mitteltrommelanordnung einer Bautrommel, mit
einer Trommelschulter (10); und
einem Mitteltrommelblock (20) mit einer Montagenut (21) und einem Befestigungsloch (22); **gekennzeichnet durch**
ein erstes Befestigungsmittel (30), das beweglich in der Trommelschulter (10) angeordnet ist und in der Lage ist, sich entlang der axialen Richtung der Bautrommel zu bewegen, wobei das erste Befestigungsmittel (30) eine Stufenfläche aufweist und der Mitteltrommelblock (20) in radialer Richtung der Bautrommel an die Trommelschulter (10) anliegt, wobei die Montagenut (21) mit dem ersten Befestigungsmittel (30) ausgerichtet ist, der Mitteltrommelblock (20) gegen die Stufenfläche drückt und ein Teil des ersten Befestigungsmittels (30) in die Montagenut (21) hineinragt; und
ein zweites Befestigungsmittel (40), wobei ein Teil des zweiten Befestigungsmittels (40) durch die Trommelschulter (10) hindurchgeht, wobei, nachdem sich ein Teil des ersten Befestigungsmittels (30) in die Montagenut (21) erstreckt, das Befestigungsloch (22) mit dem zweiten Befestigungsmittel (40) ausgerichtet ist, der Mitteltrommelblock (20) entlang der axialen Richtung der Bautrommel nahe an der Trommelschulter (10) liegt und ein Teil des zweiten Befestigungsmittels (40), der aus der Trommelschulter (10) herausragt, sich in das Befestigungsloch (22) erstreckt.

2. Mitteltrommelbaugruppe nach Anspruch 1, wobei der Mitteltrommelblock (20) bogenförmig ist und die Montagenut (21) sowohl mit einer Innenwand der Bogenform als auch mit einer Endfläche der Bogenform in Verbindung steht.

3. Mitteltrommelanordnung nach Anspruch 1, wobei das erste Befestigungsmittel (30) einen Abschnitt mit großem Durchmesser und einen Abschnitt mit kleinem Durchmesser aufweist, die nacheinander verbunden sind, die Stufenfläche zwischen dem Abschnitt mit großem Durchmesser und dem Abschnitt mit kleinem Durchmesser ausgebildet ist, sich der Abschnitt mit kleinem Durchmesser in die Trommelschulter (10) erstreckt und sich der Abschnitt mit großem Durchmesser in die Montagenut (21) erstrecken kann.

4. Mitteltrommelanordnung nach Anspruch 3, wobei die Montagenut (21) einen Abschnitt mit sich vergrößerndem Durchmesser und einen Abschnitt mit sich verkleinerndem Durchmesser aufweist, die nacheinander miteinander verbunden sind, der Abschnitt mit sich verkleinerndem Durchmesser näher an einer Endfläche der Trommelschulter (10) liegt als der Abschnitt mit sich vergrößerndem Durchmesser, der Abschnitt mit großem Durchmesser sich in den Abschnitt mit sich vergrößerndem Durchmesser erstreckt, der Abschnitt mit kleinem Durchmesser sich in den Abschnitt mit sich verkleinerndem Durchmesser erstreckt und die Stufenfläche an einer Endfläche des Abschnitts mit sich verkleinerndem Durchmesser anliegt, die dem Abschnitt mit sich vergrößerndem Durchmesser zugewandt ist.

5. Mitteltrommelanordnung nach Anspruch 1, wobei eine Außenkante der Montagenut (21) mit einer geneigten Fläche (23) versehen ist, entlang einer Richtung, in der der Mitteltrommelblock (20) in radialer Richtung der Bautrommel an der Trommelschulter (10) anliegt, die geneigte Fläche (23) in einer Richtung weg von der Trommelschulter (10) geneigt ist, wenn der Mitteltrommelblock (20) in radialer Richtung der Bautrommel an der Trommelschulter (10) anliegt, die geneigte Fläche (23) gegen die Stufenfläche drückt und es dem ersten Befestigungsmittel (30) ermöglicht, sich in einer Richtung aus der Trommelschulter (10) herauszubewegen und sich in die Montagenut (21) zu erstrecken.

6. Mitteltrommelanordnung nach Anspruch 1, wobei die Mitteltrommelanordnung ferner ein elastisches Element (50) aufweist, wobei zwei Enden des elastischen Elements (50) jeweils an der Trommelschulter (10) und dem ersten Befestigungsmittel (30) anliegen und eine elastische Kraft für das erste Befestigungsmittel (30) bereitstellen, das sich in einer Richtung bewegt, in der es sich in die Trommelschulter (10) hinein erstreckt.

7. Mitteltrommelanordnung nach Anspruch 1, wobei der Mitteltrommelblock (20) einen Zahnabschnitt (24), der an einer Außenseite des Mitteltrommelblocks (20) angeordnet ist; und
einen Verbindungsabschnitt (25) aufweist, der an einer Innenseitenfläche eines Endabschnitts des Zahnabschnitts (24) angeordnet ist, wobei die Montagenut (21) und das Befestigungsloch (22) beide an einer Endfläche des Verbindungsabschnitts (25) vorgesehen sind.

8. Mitteltrommelanordnung nach Anspruch 1, wobei eine Mehrzahl von Befestigungslöchern (22) und eine Mehrzahl von zweiten Befestigungsmitteln (40) vorgesehen sind und beide Seiten der Montagenut (21) jeweils an mindestens einem Befestigungsloch (22) der Mehrzahl von Befestigungslöcher (22) angeordnet sind.

9. Mitteltrommelbaugruppe nach Anspruch 1, wobei die Montagenut (21) eine U-förmige Nut ist, das erste Befestigungsmittel (30) eine Schraube mit einem Schraubenkopf ist und das zweite Befestigungsmittel (40) ein Stift ist.

10. Bautrommel mit einer Mitteltrommelbaugruppe nach einem der Ansprüche 1 bis 9.

11. Austauschverfahren eines Mitteltrommelblocks einer Mitteltrommelbaugruppe gemäß einem der Ansprüche 1 bis 9, wobei das Austauschverfahren des Mitteltrommelblocks (20) umfasst: der Mitteltrommelblock (20) ist nahe einer Seite einer Trommelschulter (10) in radialer Richtung der Mitteltrommelbaugruppe angeordnet und bildet einen Spalt mit einer Endfläche der Trommelschulter (10), und der Mitteltrommelblock (20) bewegt sich dann während eines Bewegungsvorgangs weiter in Richtung einer Mitte der Mitteltrommelbaugruppe, der Mitteltrommelblock (20) drückt eine Stufenfläche des ersten Befestigungsmittels (30) derart, dass ein Ende des ersten Befestigungsmittels (30) von der Trommelschulter (10) entfernt ist und sich in die Montagenut (21) erstreckt, wenn der Mitteltrommelblock (20) sich bewegt, bis das Befestigungsloch (22) mit dem zweiten Befestigungsmittel (40) ausgerichtet ist, der Mitteltrommelblock (20) ist nahe der Endfläche der Trommelschulter (10) entlang axialer Richtung der Mitteltrommelbaugruppe angeordnet, ein Teil des ersten Befestigungsmittels (30) zieht sich in die Trommelschulter (10) zurück und das zweite Befestigungsmittel (40) erstreckt sich in das Befestigungsloch (22).

12. Austauschverfahren des Mitteltrommelblocks gemäß Anspruch 11, wobei das erste Befestigungsmittel (30) einen Abschnitt mit großem Durchmesser und einen Abschnitt mit kleinem Durchmesser aufweist, die nacheinander verbunden sind; die Stufenfläche zwischen dem Abschnitt mit großem Durchmesser und dem Abschnitt mit kleinem Durchmesser ausgebildet ist; wenn der Mitteltrommelblock (20) auf die Stufenfläche drückt, sich das erste Befestigungsmittel (30) in einer Richtung aus der Trommelschulter (10) herausbewegt; und sich der Abschnitt mit großem Durchmesser in die Montagenut (21) erstreckt.

13. Austauschverfahren des Mitteltrommelblocks gemäß Anspruch 11, wobei eine Außenkante der Montagenut (21) mit einer geneigten Fläche (23) versehen ist und wenn sich der Mitteltrommelblock (20) weiter in Richtung der Mitte der Mitteltrommelbaugruppe bewegt, die geneigte Fläche (23) auf die Stufenfläche drückt.

14. Austauschverfahren des Mitteltrommelblocks gemäß Anspruch 11, wobei die Mitteltrommelanordnung ferner ein elastisches Element (50) aufweist, wobei, wenn der Mitteltrommelblock (20) auf die Stufenfläche drückt, das erste Befestigungsmittel (30) das elastische Element (50) zusammendrückt, die Länge des elastischen Elements (50) verkürzt wird und wenn der Mitteltrommelblock (20) in axialer Richtung der Mitteltrommelbaugruppe in der Nähe der Endfläche der Trommelschulter (10) angeordnet ist, das erste Befestigungsmittel (30) das elastische Element (50) freigibt und die Länge des elastischen Elements (50) verlängert wird.o,

## Revendications

1. Ensemble tambour central d'un tambour de construction, comprenant :
un épaulement de tambour (10) ;
un bloc de tambour central (20) comportant une rainure de montage (21) et un trou de fixation (22) ; **caractérisé par**
une première pièce de fixation (30) disposée de manière mobile dans l'épaulement de tambour (10) et permettant de se déplacer le long de la direction axiale du tambour de construction, la première pièce de fixation (30) présente une surface étagée et le bloc de tambour central (20) est en butée contre l'épaulement de tambour (10) dans la direction radiale du tambour de construction, la rainure de montage (21) est alignée sur la première pièce de fixation (30), le bloc de tambour central (20) appuie sur la surface étagée et une partie de la première pièce de fixation (30) s'étend dans la rainure de montage (21) ; et
une seconde pièce de fixation (40), une partie de la seconde pièce de fixation (40) passant à travers l'épaulement de tambour (10), dans lequel, après que la partie de la première pièce de fixation (30) s'étend dans la rainure de montage (21), le trou de fixation (22) est aligné sur la seconde pièce de fixation (40), le bloc de tambour central (20) est proche de l'épaulement de tambour (10) le long de la direction axiale du tambour de construction, et une partie de la seconde pièce de fixation (40) exposée hors de l'épaulement de tambour (10) s'étend dans le trou de fixation (22).

2. Ensemble tambour central selon la revendication 1, dans lequel le bloc de tambour central (20) est en forme d'arc et la rainure de montage (21) est en communication à la fois avec une paroi latérale interne de la forme d'arc et une surface d'extrémité de la forme d'arc.

3. Ensemble tambour central selon la revendication 1, dans lequel la première pièce de fixation (30) comprend une section de grand diamètre et une section de petit diamètre qui sont reliées de manière séquentielle, la surface étagée est formée entre la section de grand diamètre et la section de petit diamètre, la section de petit diamètre s'étend dans l'épaulement de tambour (10) et la section de grand diamètre permet de s'étendre dans la rainure de montage (21).

4. Ensemble tambour central selon la revendication 3, dans lequel la rainure de montage (21) comprend une section d'expansion de diamètre et une section de réduction de diamètre qui communiquent de manière séquentielle l'une avec l'autre, la section de réduction de diamètre est plus proche d'une surface d'extrémité de l'épaulement de tambour (10) que la section d'expansion de diamètre, la section de grand diamètre s'étend dans la section d'expansion de diamètre, la section de petit diamètre s'étend dans la section de réduction de diamètre, et la surface étagée vient en butée contre une surface d'extrémité de la section de réduction de diamètre qui fait face à la section d'expansion de diamètre.

5. Ensemble tambour central selon la revendication 1, dans lequel un bord externe de la rainure de montage (21) est pourvu d'une surface inclinée (23), le long d'une direction dans laquelle le bloc de tambour central (20) vient en butée contre l'épaulement de tambour (10) dans la direction radiale du tambour de construction, la surface inclinée (23) est inclinée dans une direction s'éloignant de l'épaulement de tambour (10), lorsque le bloc de tambour central (20) vient en butée contre l'épaulement de tambour (10) dans la direction radiale du tambour de construction, la surface inclinée (23) appuie sur la surface étagée, et permet à la première pièce de fixation (30) de se déplacer dans une direction de saillie par rapport à l'épaulement de tambour (10), et de s'étendre dans la rainure de montage (21).

6. Ensemble tambour central selon la revendication 1, dans lequel l'ensemble tambour central comprend en outre un élément élastique (50), dans lequel deux extrémités de l'élément élastique (50) sont respectivement en butée contre l'épaulement de tambour (10) et la première pièce de fixation (30) et fournissent une force élastique pour la première pièce de fixation (30) se déplaçant dans une direction s'étendant dans l'épaulement de tambour (10).

7. Ensemble tambour central selon la revendication 1, dans lequel le bloc de tambour central (20) comprend :
une partie dentée (24) située sur un côté externe du bloc de tambour central (20) ;
une partie de liaison (25) située sur une surface latérale interne d'une partie d'extrémité de la partie dentée (24), dans lequel la rainure de montage (21) et le trou de fixation (22) sont tous deux ménagés sur une surface d'extrémité de la partie de liaison (25).

8. Ensemble tambour central selon la revendication 1, dans lequel une pluralité de trous de fixation (22) et une pluralité de secondes pièces de fixation (40) sont prévus, et les deux côtés de la rainure de montage (21) sont respectivement agencés sur au moins un trou de fixation (22) de la pluralité de trous de fixation (22).

9. Ensemble tambour central selon la revendication 1, dans lequel la rainure de montage (21) est une rainure en forme de U, la première pièce de fixation (30) est une vis présentant une tête de vis et la seconde pièce de fixation (40) est une broche.

10. Tambour de construction, comprenant l'ensemble tambour central selon l'une quelconque des revendications 1-9.

11. Procédé de remplacement d'un bloc de tambour central d'un ensemble tambour central selon l'une quelconque des revendications 1-9, le procédé de remplacement du bloc de tambour central (20) comprend : le bloc de tambour central (20) est proche d'un côté d'un épaulement de tambour (10) dans la direction radiale de l'ensemble tambour central et forme un espace avec une surface d'extrémité de l'épaulement de tambour (10) et, ensuite, le bloc de tambour central (20) continue de se déplacer vers un centre de l'ensemble tambour central, pendant un processus de déplacement, le bloc de tambour central (20) appuie sur une surface étagée de la première pièce de fixation (30) de telle sorte qu'une extrémité de la première pièce de fixation (30) s'éloigne de l'épaulement de tambour (10) et s'étende dans la rainure de montage (21), lorsque le bloc de tambour central (20) se déplace jusqu'à ce que le trou de fixation (22) soit aligné sur la seconde pièce de fixation (40), le bloc de tambour central (20) est proche de la surface d'extrémité de l'épaulement de tambour (10) le long de la direction axiale de l'ensemble tambour central, une partie de la première pièce de fixation (30) se rétracte dans l'épaulement de tambour (10), et la seconde pièce de fixation (40) s'étend dans le trou de fixation (22).

12. Procédé de remplacement du bloc de tambour central selon la revendication 11, dans lequel la première pièce de fixation (30) comprend une section de grand diamètre et une section de petit diamètre qui sont reliées de manière séquentielle ; la surface étagée est formée entre la section de grand diamètre et la section de petit diamètre ; lorsque le bloc de tambour central (20) appuie sur la surface étagée, la première pièce de fixation (30) se déplace dans une direction de saillie à partir de l'épaulement de tambour (10) ; et la section de grand diamètre s'étend dans la rainure de montage (21).

13. Procédé de remplacement du bloc de tambour central selon la revendication 11, dans lequel un bord externe de la rainure de montage (21) est pourvu d'une surface inclinée (23) et, lorsque le bloc de tambour central (20) continue de se déplacer vers le centre de l'ensemble tambour central, la surface inclinée (23) appuie sur la surface étagée.

14. Procédé de remplacement du bloc de tambour central selon la revendication 11, dans lequel l'ensemble tambour central comprend en outre un élément élastique (50), lorsque le bloc de tambour central (20) appuie sur la surface étagée, la première pièce de fixation (30) comprime l'élément élastique (50), la longueur de l'élément élastique (50) est raccourcie et, lorsque le bloc de tambour central (20) est proche de la surface d'extrémité de l'épaulement de tambour (10) dans la direction axiale de l'ensemble tambour central, la première pièce de fixation (30) libère l'élément élastique (50) et la longueur de l'élément élastique (50) est allongée.
